# EUROPEAN PATENT APPLICATION

(11) **EP 1 137 155 A2**
(43) Date of publication of application: **26.09.2001**
(21) Application number: 01107017.4
(22) Date of filing: 21.03.2001
(51) Int. Cl.: H02K 11/00

(54) **Synchronous motor with permanent magnet rotor and screen between stator and rotor**

(30) Priority: 22.03.2000 IT TO000275
(71) Applicant: C.E.SET. S.r.l., 14033 Castell'Alfero (AT) (IT)
(72) Inventor: Milano, Francesco, 10060 S. Pietro Val Lemina (TO) (IT)
(74) Representative: Dini, Roberto, Dr. Ing.

(57) **Abstract**

Synchronous motor (1) comprising a stator (3) with two poles (5,6), a rotor (4) with permanent magnets and means (18) apt to form a screen for removing and/or reducing a reverse rotating magnetic field with respect to the magnetic field that generates rotation.

The invention is featured by said means (18) interlaying between said stator (3) and said rotor.

## Description

The present invention relates to a synchronous motor for a centrifugal pump, which is used, in particular, as a discharge pump for a washing machine.

As known, washing machines are fitted with a wash pump and a discharge pump driven by a respective electric motor.

The motor currently employed for the discharge pump is a synchronous motor with a permanent magnets rotor and a two-pole stator. The feature of this type of motor is to maintain a constant speed, provided there is a constant mains frequency, both when running idle and under load.

The reason for employing a synchronous motor is due to its low manufacturing cost and speed stability.

As known, synchronous motors have start-up drawbacks, in particular the motors with single-phase power supply, since at their start the magnetic field is unidirectional and not rotating.

However, it is also known that low power synchronous motors with permanent magnets rotor can be made self-starting, manufacturing the stator core lamination in such a way to have an asymmetric air gap.

Starting this motor, which should occur without axis loading, is explained in that the unidirectional magnetic field consists of two magnetic fields rotating in opposite direction and that due to the variable gap, the action of the magnetic field in rotating the rotary direction prevails against the other.

The magnetic field contrary to the rotary direction, which is called reverse magnetic field and has a smaller amplitude, causes considerable vibrations in the motor with consequent noisiness of the motor itself; moreover, these vibrations also involve the rotor supports with consequent damages.

In the motors having a higher power, these vibrations can be transmitted by the motor also to the washing machine on which they are assembled, with a consequent noisiness increase.

As known, in order to remove and/or decrease such a reverse magnetic field in synchronous motors and consequently motor vibrations, a squirrel-cage damping winding is commonly applied near the poles, i.e. consisting of many bars made of a diamagnetic material, such as copper, inserted in appropriate through holes in the polar extensions parallel to the axis and connected (short-circuited) between them on each front edge by a circular ring of the same material.

The action exerted by this winding is null with respect to the direct rotating field and will operate exclusively on the reverse magnetic field.

In fact, through the cutting of the cage bars with a low resistance, the reverse magnetic field generates intense double frequency currents in it (such as the parasite currents it is inducing in the poles): these currents, which react according to Lenz's law to the cause generating them, are exactly in contrast with the reverse magnetic field, so that the cage will form a real screen preventing the reverse magnetic field from entering in the poles.

In order to have an efficient damping winding, i.e. removing the reverse magnetic field up to an irrelevant residual, it should have a small dispersion and consequently be as near as possible to the air gap.

Now, if this solution is reasonable for the motors of a certain size, i.e. having a certain cost, in the instance of small size motors with a permanent magnets rotor like the synchronous motors for the pumps of a washing machine, this solution will considerably levy on the manufacturing costs of the motor and cancel the economical advantages obtained using such a motor.

Another drawback caused by the reverse magnetic field is to hinder the motor from starting when the supply voltage is at the minimum mains value, i.e. about 10% under the rated value, with a consequent failing operation of the pump connected to it.

It is the object of the present invention to solve the above drawbacks and provide a synchronous motor with a two-pole stator and a permanent magnets rotor, having a simple cost-effective manufacture.

In this frame, it is a first object of the invention to provide a synchronous motor, which is fitted with appropriate means for removing and/or decreasing the reverse rotating magnetic field.

A second object is to provide a synchronous motor, wherein said means ensure a removal and/or decrease of the vibration problems of the motor.

A third object of the invention is to provide a synchronous motor, wherein said means ensure its start-up also with a voltage under the minimum mains value.

In order to achieve such aims, it is the object of the present invention to provide a synchronous motor with a two-pole stator and a permanent magnets rotor, incorporating the features of the annexed claims, which form an integral part of the description herein.

Further objects, features and advantages of the present invention will become apparent from the following detailed description and annexed drawings, which are supplied by way of non limiting example, wherein:

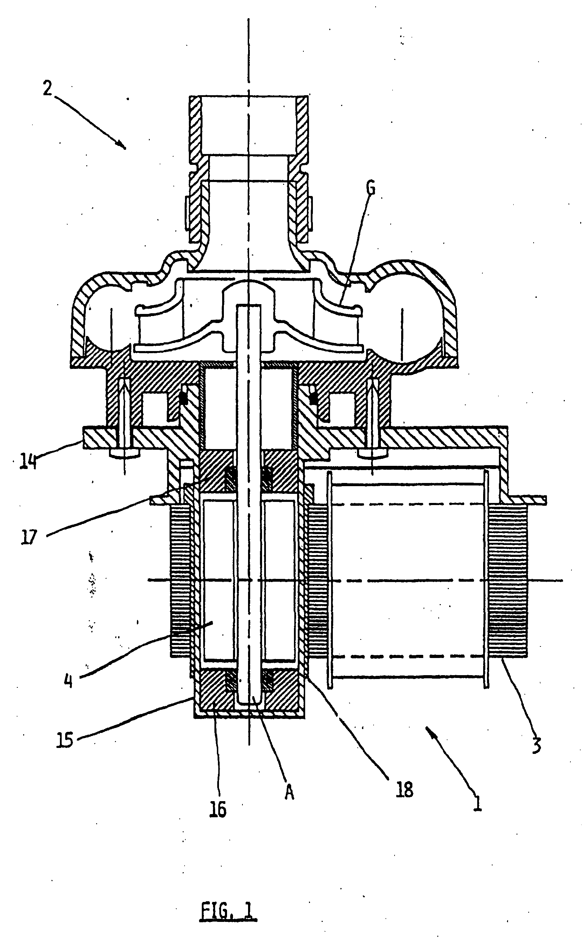

- Fig. 1 shows schematically a lengthwise section of a synchronous motor according to the present invention, assembled on a centrifugal pump;

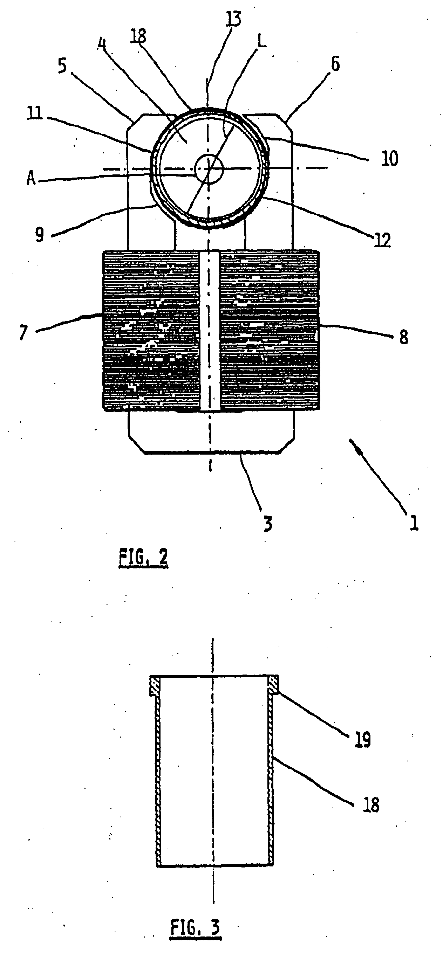

- Fig. 2 shows schematically a partial cross section of a synchronous motor according to the invention;
- Fig. 3 shows schematically a lengthwise section of a component of a synchronous motor according to the present invention.

With reference to the above figures, reference 1 indicates a synchronous motor in its whole according to the present invention and reference 2 a centrifugal pump in its whole.

The synchronous motor 1 consists of a stator 3 and a rotor 4 with permanent magnets. The rotor 4 has a rotary shaft A connected lengthwise and integrally to it. The ends of the rotary shaft A protruding out of the rotor are not symmetric between them, but one of them is longer than the other.

The stator 3 has two poles indicated with reference 5 and 6 respectively, each one of them with an excitation winding indicated with 7 and 8, respectively. Both windings 7 and 8 are electrically connected in series to each other.

Both poles 5 and 6 have two portions, indicated with 9 and 10, respectively, whose air gap is greater than the air gap delimited by two other portions indicated with 11 and 12.

This air-gap change causes the rotor 4 to have its ideal parting line L between its two poles, inclined of a certain angle with respect to the motor axis 13; according to this configuration motor start-up in a predetermined direction will be easier.

Reference 14 indicates a supporting stirrup, where the motor 1 is fastened on one side and the pump 2 on the opposite side.

Perpendicular to the side where the motor 1 is fastened, the supporting stirrup 14 has a tubular extension 15 closed on one end, wherein the rotor 4 is inserted.

The rotor 4 is free to rotate inside the tubular extension 15, where it is kept in position by two supports 16 and 17, respectively, on which the rotary shaft A is resting. The supports 16 and 17, made from graphite or plastic material, are commonly known and are not described herein.

The longer end of the rotary shaft A is connected to the impeller G of the pump 2.

The rotor 4 is inserted in the tubular extension 15 in a separate manner from the stator 3, because the tubular extension 15 needs to be hydraulically connected to the pump 2, whereas the rotor 4 has to be immersed in a lubricating fluid. Through this configuration two main advantages are obtained: first, the fluid wherein the rotor is immersed operates as a lubricant for the supports 16 and 17, also avoiding their drying and/or hardening during extended periods of the pump inactivity; second, no hydraulic sealing means between the pump and the rotor are required.

Manufacture of a centrifugal pump with a permanent magnets synchronous motor, whose rotor is sealed in a chamber containing lubricating fluid, separate from the stator, is known and will not be described herein.

Reference 18 indicates a cylindrical element with a flanging 19 on one end.

The cylindrical element 18 is inserted between the poles 5 and 6 of the stator 3 of the synchronous motor 1; its length is equal to and/or longer than the thickness of the stator pack and its outer diameter is substantially similar to the inner diameter of the recess resulting between the stator poles 5 and 6; thus, the cylindrical element 18 is substantially driven between the two poles 5 and 6.

The flanging 19 is used to delimit the final inserting position of the cylindrical element 18 in the stator pack, striking against the stator pack itself.

The inner diameter of the cylindrical element 18 is such to contain the extension 15 wherein the rotor 4 is inserted.

The cylindrical element 18, inserted between the stator and rotor, operates as a damping winding of the reverse magnetic field forming in the motor, as if it were a squirrel cage, but obtained with one sole bar arranged all around the rotor, clearly with very low manufacturing costs.

Through the cutting of the cylindrical element 18, the reverse magnetic field generates intense double frequency currents in it (such as the parasite currents it is inducing in the poles): these currents, which react to the cause generating them according to Lenz's law, as mentioned above, are able to contrast the reverse magnetic field, so that the cylindrical element 18 will form a real screen preventing the reverse magnetic field from entering in the poles.

The action exerted by this damping winding is null with regard to the rotor direct rotating field and will operate exclusively on the reverse magnetic field. Therefore, rotor vibrations and consequently any noisiness and reliability issues will be removed.

Manufacturing efficiency of such a damping element of the reverse magnetic field is such to allow start-up of the motor also when the mains voltage is substantially lower than the minimum mains value.

In order to perform the function of a damping winding of the reverse magnetic field, the cylindrical element 18 is made from a diamagnetic material, such as aluminium or copper.

Assembly of the synchronous motor described above to Its relevant pump provides the following steps:
- inserting the rotor 4 with its relevant supports 16 and 17 in the extension 15 of the supporting stirrup 14,
- pre-assembling the centrifugal pump 2 and connecting it to the stirrup 14, making sure the end of the rotary shaft A is inserted in the appropriated seat in the impeller G,
- inserting the cylindrical element 18 in the stator 3 between the poles 5 and 6, until the flange 19 strikes against the stator pack,
- inserting the extension 15 inside the cylindrical element 18,
- fastening the stator 3 to the stirrup 14.

The features of the synchronous motor comprising a two-pole stator and a permanent magnets rotor will become apparent from the above description and annexed drawings.

From the above description also the advantages of the synchronous motor comprising a two-pole stator and a permanent magnets rotor, according to the present invention, are clear.

In particular, they consist in the fact that:
- minimize the reverse rotating magnetic field;
- remove and/or decrease the motor operating vibrations;
- ensure motor start-up also with voltages under the minimum mains value;
- allow manufacture of a damping element of the reverse magnetic field with one sole element;
- ensure easy manufacture at low costs.

It is obvious that many changes and applications are possible for the man skilled in the art to a synchronous motor described above by way of example, without departing from the novelty spirit of the innovative idea.

For instance, this synchronous motor can be utilized for all those applications where a high power is not requested, either with the rotor immersed in a fluid for its lubrication or with rotor in the air.

In the latter instance the rotor will rotate inside the cylindrical element 18 located between the stator poles without any other interlaying components.

It is clear that many other changes and applications are easily possible and applicable for the man skilled in the art to a synchronous motor described above by way of example, and it is also clear that in practical actuation of the invention the components may often differ in form and size from the ones described and be replaced with technical equivalent elements.

## Claims

1. A synchronous motor comprising a stator (3) with two poles (5,6), a rotor (4) with permanent magnets and means (18) apt to form a screen for removing and/or reducing a reverse rotàting magnetic field with regard to the magnetic field that generates rotation, **characterized in that** said means (18) are interlaying between said stator (3) and said rotor (4).

2. A motor according to claim 1, **characterized in that** said means (18) are inserted between said poles (5,6) of said stator (3).

3. A motor according to claim 1, **characterized in that** said means (18) are not rotating.

4. A motor according to claim 1, **characterized in that** said means (18) are independent both from said stator (3) and said rotor (4).

5. A motor according to claim 2, **characterized in that** said means (18) consist of a cylindrical element (18),

6. A motor according to claim 5, **characterized in that** said cylindrical element (18) is made from a diamagnetic material, in particular aluminium or copper.

7. A motor according to claim 5, **characterized in that** said cylindrical element (18) has a flanging (19), which is apt to delimit its insertion between said poles (5,6).

8. A motor according to one or more of the previous claims, **characterized in that** said rotor (4) rotates inside said cylindrical element (18).

9. A motor according to claim 1, **characterized in that** said rotor (4) has a rotary shaft (A) integral with it.

10. A motor according to the previous claim, **characterized in that** one end of said rotary shaft (A) is connected to an impeller (G) of a centrifugal pump (2).

11. A motor according to claim 1, **characterized in that** said means (18) reduce the value of the reverse rotating magnetic field to such an extent to ensure its start-up with a voltage under the minimum mains value.

12. A method for obtaining a synchronous motor, comprising a stator (3) with two poles (5,6) and a rotor (4) with permanent magnets, **characterized in that** a cylindrical element (18) made from diamagnetic material is interlaid between said stator (3) and said rotor (4).

13. A method according to the previous claim, **characterized in that** said cylindrical element (18) is inserted between said poles (5,6) of said stator (3).

14. A centrifugal pump comprising an electric motor for its operation, **characterized in that** said electric motor is a synchronous motor according to one or more of the previous claims.

15. A washing machine comprising at least a centrifugal pump associated to a synchronous motor (1) according to one or more of the previous claims.
